# EUROPÄISCHE PATENTSCHRIFT

(11) **EP 3 522 122 B1**
(45) Veröffentlichungstag und Bekanntmachung des Hinweises auf die Patenterteilung: **25.08.2021**
(21) Anmeldenummer: 18155121.9
(22) Anmeldetag: 05.02.2018
(51) Int. Cl.: G07C 9/00, B65F 1/16, H04L 9/32

(54) **ZUGANGSSYSTEM FÜR BENUTZER EINES MÜLLCONTAINERS UND VERFAHREN ZUM BETREIBEN EINES ZUGANGSSYSTEMS FÜR MÜLLCONTAINER**
ACCESS SYSTEM FOR USERS OF A REFUSE CONTAINER AND METHOD FOR OPERATING OF AN ACCESS SYSTEM FOR WASTE CONTAINERS
SYSTÈME D'ACCÈS POUR L'UTILISATEUR D'UN BAC ROULANT ET PROCÉDÉ DE FONCTIONNEMENT D'UN SYSTÈME D'ACCÈS POU BAC ROULANT

(43) Veröffentlichungstag der Anmeldung: 07.08.2019
(73) Patentinhaber: emz-Hanauer GmbH & Co. KGaA, 92507 Nabburg (DE)
(72) Erfinder: HANAUER, Thomas, 92507 Nabburg (DE); JANSSEN, Raoul, 92421 Schwandorf (DE)
(74) Vertreter: Hannke, Christian

(56) Entgegenhaltungen:
- EP-A1- 3 125 201
- US-A1- 2007 058 811
- US-A1- 2015 194 000
- US-A1- 2015 307 273
- US-B2- 7 597 250

## Beschreibung

Die vorliegende Erfindung betrifft ein System zur Kontrolle und Steuerung des Zugangs für einen Benutzer zu einem Müllcontainer sowie ein Verfahren zur Kontrolle und Steuerung des Zugangs für einen Benutzer zu einem Müllcontainer.

Systeme zur Kontrolle und Steuerung des Zugangs für einen Benutzer zu einem Müllcontainer zur Entsorgung von beispielsweise Hausmüll sind aus dem Stand der Technik bekannt. Oftmals betrifft dies großräumige Müllcontainer, welche bereitgestellt und von mehreren Haushalten benutzt werden. Derartige Müllcontainer können beispielsweise einer Hausgemeinschaft oder auch einer Kommune zugehörig sein. In der Regel sollen nur registrierte Benutzer einen Zugang zu solchen Müllcontainern erhalten, wobei der Zugang gesperrt werden kann beispielsweis bei Nichtzahlung der Entsorgungskosten. Ein solcher Zugang kann mittels verschiedenster elektronischer Systeme realisiert werden. Aus dem Stand der Technik ist beispielsweise bekannt, dass einem Benutzer ein Identifikationscode zugewiesen wird. Dieser Identifikationscode wird beispielsweise über einen an dem Müllcontainer angeordneten Ziffernblock eingegeben. Der entsprechende Authentifizierungsprozess wird entweder durch eine lokale Steuereinheit in dem Müllcontainer oder über einen zentralen Server, welcher mit der lokalen Steuereinheit des Müllcontainers in Verbindung steht, vorgenommen. Nach der Authentifizierung wird der Müllcontainer dann temporär geöffnet und der Benutzer kann seinen Müll entsorgen.

Ein weiteres System ist beispielsweise aus der Patentanmeldung US 2015 / 0307273 A1 bekannt. Darin ist ein Müllcontainer mit einem ferngesteuerten Verriegelungsmechanismus, einer Steuereinheit, verschiedenen Sensoren und einem Kommunikationsmodul beschrieben. Mittels der verschiedenen Sensoren kann beispielsweise der Füllstand, das Gewicht des eingeworfenen Mülls oder die Bewegung des Deckels detektiert werden. Über entsprechende Kommunikationsschnittstellen sind der Müllcontainer und ein Server in ein gemeinsames Netzwerk eingebunden. In dieses Netzwerk kann auch ein Smartphone eingebunden sein, über welches Zugang zu dem Müllcontainer angefragt oder Informationen über das System abgefragt werden können. Weitere relevante Überlegungen werden in EP3125201 A1 und US2015/307273A1 offenbart.

Ein Problem bei derartigen Systemen ist, dass die Kommunikation zwischen dem Müllcontainer und dem Server energieintensiv ist und aufgrund der Nutzung von Netzwerkressourcen Kosten verursacht.

Insbesondere bei Müllcontainern, die keiner Hausgemeinschaft zugeordnet sind sondern im öffentlichen Raum aufgestellt sind, ist die Energieversorgung oft problematisch, da die Energieversorgung vor Zugriff durch unbefugte Personen geschützt werden muss. Außerdem verlangen Energieversorger zur Abrechnung Messgeräte zur Erfassung der benötigten Energie. Die Kosten für diese Messgeräte übersteigen oftmals die Energiekosten um ein Vielfaches, so dass hier alternative Lösungen gewünscht sind. Bisherige Lösungsvorschläge schließen beispielsweise die dezentrale Stromversorgung über Batterien, Solarzellen oder Generatoren (Umwandlung von Windenergie oder mechanischer, durch Benutzer eingebrachter Energie) ein. Diese Lösungen sind jedoch ebenfalls kostenintensiv und vergrößern den Müllcontainer bei gleichem Aufnahmevermögen, was im öffentlichen Raum ebenfalls unerwünscht ist.

Weitere Kosten entstehen aufgrund der oftmals vorgesehenen Nutzung von Mobilfunkverbindungen zur Übertragung von Daten zwischen einem Server und einem Müllcontainer. Der Müllcontainer muss für eine solche Datenübertragung mit einer entsprechenden und stromverbrauchenden Übertragungstechnik ausgerüstet sein. Derartige Müllcontainer sind daher vergleichsweise teuer und benötigen Strom zur Kommunikation über das Mobilfunknetz, wobei diese Kommunikation aufgrund der vom Mobilfunknetzbetreiber erhobenen Entgelte ebenfalls Kosten und Verwaltungsaufwand erzeugt.

Aufgabe der vorliegenden Erfindung ist es daher, ein System zur Verfügung zu stellen, welches die oben genannten Nachteile ausräumt oder zumindest minimiert.

Diese Aufgabe wird durch die unabhängigen Ansprüche, insbesondere das System gemäß Anspruch 1 und das Verfahren gemäß Anspruch 9, gelöst.

Ein wesentlicher Aspekt der Erfindung ist ein System zur Kontrolle und Steuerung des Zugangs für einen Benutzer zu einem Müllcontainer umfassend einen Müllcontainer mit einer elektronischen Steuereinheit mit einer ersten Kommunikationsschnittstelle zum Senden und Empfangen von Daten und einen von dem Müllcontainer beabstandeten Server, welcher eine zweite Kommunikationsschnittstelle, einen Authentifizierungsmanager und eine Datenbank aufweist. Zur Identifizierung eines Benutzers vor der Nutzung des Müllcontainers ist zwischen der ersten Kommunikationsschnittstelle und einer dritten Kommunikationsschnittstelle eines einem Benutzer zuordenbaren Kommunikationsgeräts ein Transfer von Daten initiierbar. Der Authentifizierungsmanager ordnet Benutzerdaten aus der Datenbank den Daten zu und auf Basis dieser Zuordnung ist der Zugang zu diesem Müllcontainer für diesen Benutzer freigebbar oder verweigerbar. Wesentlich ist dabei, dass die erste Kommunikationsschnittstelle keine Einrichtung zur direkten Datenübertragung an die zweite Kommunikationsschnittstelle aufweist, sondern das dem Benutzer zuordenbare Kommunikationsgerät eine Schnittstelleneinrichtung aufweist, über welche eine indirekte Datenübertragung zwischen erster Kommunikationsschnittstelle und zweiter Kommunikationsschnittstelle initiierbar ist. Es ist somit nicht vorgesehen, dass der Müllcontainer eine leistungsstarke Kommunikationsschnittstelle umfasst, mittels welcher die direkte Kommunikation (z.B. über ein Mobilfunknetz) mit dem Server ermöglicht wird. Vielmehr ist vorgesehen, dass zum Datenaustausch zwischen Müllcontainer und Server Kommunikationskanäle benutzt werden, welche durch das einem Benutzer zuordenbare Kommunikationsgerät (beispielsweise dessen Smartphone) bereitgestellt werden. Sowohl der Energiebedarf für die Übertragung der Daten über ein weitreichendes (zumindest abschnittsweise drahtloses) Netzwerk an den Server als auch die dabei anfallenden Netz-Nutzungsentgelte werden somit auf den Benutzer bzw. dessen Kommunikationsgerät übertragen. Von dem Müllcontainer bzw. dessen (erster) Kommunikationsschnittstelle ist somit lediglich eine Übertragung von Daten bis zum Kommunikationsgerät des Benutzers notwendig. Da sich oftmals das Kommunikationsgerät (im Folgenden auch als Smartphone bezeichnet, auch wenn dies lediglich eine bevorzugte Ausführungsform eines Kommunikationsgeräts darstellt) auch zur Authentifizierung des Benutzers an dem Müllcontainer in dessen unmittelbarer Nähe befinden muss, kann zur Datenübertragung zwischen Müllcontainer und Kommunikationsgerät eine Übertragungstechnik mit geringer Reichweite und somit geringem Energieverbrauch genutzt werden.

In einer besonders bevorzugten Ausführungsform schließen die übertragenen Daten Identifikationsdaten ein. Im Folgenden werden "Daten" und "Identifikationsdaten" auch synonym verwendet, wenn nicht explizit etwas anderes angegeben ist. Der Begriff "Identifikationsdaten" kann somit auch andere Daten einschließen. Beispielsweise ist denkbar, dass auch Daten übertragen werden, die nicht mit der Identifizierung des aktuell in Reichweite des zwischen der ersten Kommunikationsschnittstelle und der dritten Kommunikationsschnittstelle ausbildbaren ersten Kommunikationskanals befindlichen Benutzers zusammenhängen. Beispielsweise könnten Daten zum Update einer Software zur Steuerung des Müllcontainers übertragen werden. Dazu wäre es denkbar, dass einzelne Pakete der Software auf einen Speicher des Müllcontainers übertragen werden. Dies könnte parallel oder unabhängig von der Benutzung des Müllcontainers durch einen Benutzer erfolgen, sofern sich ein beliebiger Benutzer in Reichweite des oben genannten ersten Kommunikationskanals befindet. Beispielsweise könnten derartige Datenpakete auch an einen zweiten Müllcontainer übertragen werden, während ein Benutzer einen ersten Müllcontainer nutzt.

Wie oben erwähnt, ist das Kommunikationsgerät besonders bevorzugt ein Smartphone. Es ist jedoch auch eine große Auswahl anderer Kommunikationsgeräte möglich. Grundsätzlich könnte als Kommunikationsgerät jegliche Einrichtung dienen, die zur Ausbildung einer Kommunikation mit dem Müllcontainer einerseits und dem Server andererseits geeignet ist. Bevorzugt handelt es sich bei dem Kommunikationsgerät um ein portables Datenverarbeitungsgerät, bevorzugt mit einer Anzeigeeinrichtung. Besonders bevorzugt sind Datenverarbeitungsgeräte ausgewählt aus einer Gruppe die ein Mobiltelefon, ein Smartphone, ein Tablet und ein Laptop umfasst. Insbesondere ein Smartphone ist als Kommunikationsgerät bevorzugt, da es weit verbreitet ist und eine Vielzahl von Kommunikationsschnittstellen aufweist, die zur Ausbildung einer Datenverbindung zum Müllcontainer einerseits und/oder Server andererseits genutzt werden können. Außerdem weist ein Smartphone eine Anzeigeeinrichtung auf, über welche Informationen an den Benutzer gesendet werden könnten.

In einer bevorzugten Ausführungsform des Systems ist vorgesehen, dass der Transfer von Daten zwischen der ersten und der dritten Kommunikationsschnittstelle über einen ersten Kommunikationskanal erfolgt, welcher von dem zur Kommunikation zwischen der zweiten und der dritten Kommunikationsschnittstelle eingerichteten zweiten Kommunikationskanal verschieden ist. Somit wird ermöglicht, dass die jeweiligen Kommunikationskanäle unterschiedliche Reichweiten und/oder Sendeleistungen haben. Dadurch kann eine asymmetrische Kommunikation ausgebildet werden, bei der bevorzugt die Reichweiten und/oder Sendeleistung des ersten Kommunikationskanals deutlich geringer ist als diejenige des zweiten Kommunikationskanals. Dies hat zur Folge, dass für die Kommunikation zwischen der ersten und der dritten Kommunikationsschnittstelle über den ersten Kommunikationskanal Der Energiebedarf gegenüber einer direkten Kommunikation zwischen der ersten und der zweiten Kommunikationsschnittstelle deutlich verringert ist. Die Kommunikation zwischen der ersten und der zweiten Kommunikationsschnittstelle wird unter Einbindung des Kommunikationsgeräts dennoch gewährleitet, wobei der erhöhte Energiebedarf für die Kommunikation zu und von der zweiten Kommunikationsschnittstelle über den zweiten Kommunikationskanal durch das Kommunikationsgerät und/oder andere Netzwerkteilnehmer (z.B. LAN- oder WLAN-Router, Internetprovider, Netzwerkinfrastruktur eines Mobilfunkanbieters) gedeckt wird.

Vorzugsweise sind sowohl die erste Kommunikationsschnittstelle als auch die dritte Kommunikationsschnittstelle so ausgebildet, dass zwischen diesen selbständig eine Kommunikation initiierbar ist. Selbständig bedeutet in diesem Fall, dass das Ausbilden der Kommunikation bei der Benutzung des Müllcontainers durch den Benutzer ohne Zutun des Benutzers erfolgt. Eine einmalige Einrichtung durch den Benutzer oder einen Techniker ist dennoch möglich. Eine solche einmalige Einrichtung könnte beispielsweise das "Pairing" darstellen, wie es bei über Bluetooth kommunizierenden Geräten vorgesehen ist. Auch bei der Kommunikation über WLAN ist eine einmalige Kopplung der Schnittstellen notwendig. Bei der späteren (regelmäßigen) Benutzung des Müllcontainers kann durch die Schnittstellen diese zuvor eingerichtete Kommunikationsverbindung jedoch selbständig zwischen der ersten Kommunikationsschnittstelle und der dritten Kommunikationsschnittstelle im Sinn der obigen Definition ausgebildet werden.

Vorzugsweise ist das Kommunikationsgerät ein portables Datenverarbeitungsgerät, mit einer Anzeigeeinrichtung wie beispielsweise ein Mobiltelefon, ein Smartphone, ein Tablet oder ein Laptop. Selbstverständlich ist die vorliegende Erfindung nicht beschränkt auf diese Aufzählung und es können auch weitere ähnliche Datenverarbeitungsgeräte für die Anwendung in Betracht gezogen werden. Die Verwendung von Mobiltelefonen beziehungsweise von Smartphones ist derart weit verbreitet, so dass die überwiegende Mehrheit der Mitglieder einer entsprechenden Hausgemeinschaft oder Kommune ein solches Smartphone besitzt. Das Kommunikationsgerät, welches üblicherweise so gut wie immer griffbereit ist, dient demnach als Mittel zur Authentifizierung für die Benutzung des Müllcontainers und gleichzeitig als Kommunikationsgerät für die Übertragung von Daten zwischen Müllcontainer und Server. Vorzugsweise ist auf dem Kommunikationsgerät eine Software installiert, mittels welcher der Datentransfer zwischen Müllcontainer und Server initiierbar ist.

Zusätzlich könnten durch die oben genannte Software auch Informationsnachrichten beispielsweise in Form von Push-Benachrichtigungen auf dem Kommunikationsgerät angezeigt werden. Derartige Informationsnachrichten könnten beispielsweise ausgewählt sein aus einer Gruppe, die Informationen zum Füllstand, der nächsten Leerung, dem nächsten Müllcontainer mit freier Aufnahmekapazität und anderen umfasst. Push-Benachrichtigungen sind Meldungen, welche ohne das Öffnen der jeweiligen Software/App auf dem Kommunikationsgerät erscheinen. Derartige Informationsnachrichten können vorteilhafterweise Informationen bezüglich der GPS-Daten und/oder Daten einer im Müllcontainer integrierten Sensoreinrichtung beinhalten. Denkbar wären auch Informationen über drohende Unzugänglichkeiten des Müllcontainers aufgrund Witterung, Überschwemmungen, etc. Schließlich könnten die bereitgestellten Informationen auch Informationen über Öffnungszeiten des nächsten Entsorgungs- beziehungsweise Recyclinghofes beinhalten. Durch derartige (Zusatz-) Informationsnachrichten beispielsweise bezüglich der Müllentsorgung kann einerseits eine optimale Entsorgung des Mülls beziehungsweise eine optimale Nutzung des Müllcontainers gewährleistet werden und andererseits die Akzeptanz für die Nutzung dieses Systems (und damit auch die Freigabe des Kommunikationskanals zwischen zweiter und dritter Kommunikationsschnittstelle) erhöht werden.

Weiterhin wäre es denkbar, dem Benutzer Informationen bezüglich der von ihm vorgenommen Müllentsorgung bereitzustellen. Dies könnten beispielsweise Statistiken zu Menge, Art, Zeit und Ort der Müllentsorgung sein. Basierend auf dem Gewicht und/oder dem Volumen des eingeworfenen Mülls könnten eventuell dem Benutzer des Müllcontainers die dadurch anfallenden Kosten mitgeteilt werden. Denkbar wäre auch die Darstellung von positiver Rückmeldungen beispielsweise über das Recyclingverhalten des Benutzers. Dies könnte beispielsweise in Form eines Bonusprogramms oder eines Spiels (gamification) erfolgen.

Ist ein Müllcontainer voll, könnte dem Benutzer (wie oben erwähnt) der Standort des nächsten Müllcontainers mit freier Kapazität angezeigt werden, zu welchem der Benutzer einen autorisierten Zugang hat. Sofern diese Müllcontainer im selben System integriert sind, kann auch der Zugang zu diesem alternativen Müllcontainer zentral gesteuert werden und dem Benutzer Zugang gewährt werden. Die Abrechnung könnte dann ebenfalls über eine Zentrale Mengenerfassung erfolgen. Der Standort des alternativ angebotenen Müllcontainers könnte in Form einer entsprechenden Karte, welche auf dem Kommunikationsgerät angezeigt wird, bereitgestellt werden.

Die bereitgestellten Informationen müssen jedoch nicht auf den Müllcontainer beziehungsweise die Entsorgung von Müll beschränkt sein. Vielmehr könnte bevorzugt eine auf dem Kommunikationsgerät installierte Software behördliche Informationen und/oder personalisierte Informationen zu Werbezwecken enthalten. Solche behördlichen Informationen könnten Informationen beinhalten, welche die Kommune betreffen wie beispielsweise Baumaßnahmen oder Ähnliches. Es könnten auch Erinnerungen für Bürgerentscheide, Abstimmungen oder Veranstaltungen durch die Informationsnachricht durch die Software angezeigt werden.

Weiterhin wäre es denkbar, dass dem Benutzer personalisierte Informationen zu Werbezwecken anzeigbar sind. Personalisierte Werbung ist für viele Unternehmen sehr attraktiv, da die entsprechend abgestimmte Werbung einem bestimmten Kundenkreis zugeführt werden kann. Es kann somit viel nutzlose Werbung vermieden werden. Die dem Inhaltsprovider zugeführten Benutzerdaten können beispielsweise das Alter und/oder das Geschlecht des Benutzers beinhalten. Diese Daten können dann entsprechende Unternehmen nutzen, um dem Benutzer auf ihn abgestimmte Werbung zukommen lassen. Ferner können die übermittelten Benutzerdaten auch den Standort des Benutzers (am Müllcontainer) enthalten. Es kann dem Benutzer somit auf den Umkreis begrenzte Werbung zugeführt werden. Solche Werbung könnte beispielsweise Informationen über eine Neueröffnung eines Geschäfts in der Umgebung oder über einen Sondervorkauf in der Nähe enthalten.

Gemäß einer weiteren bevorzugten Ausführungsform ist der Informationsprovider dem Server zugehörig oder eine externe Einrichtung. Demzufolge können die Informationen über den Server dem Kommunikationsgerät zugeführt werden. Demzufolge umfasst der Server weiterhin einen Speicher in dem entsprechende Informationsnachrichten speicherbar sind. Alternativ oder kumulativ kann der Informationsprovider vom Server unabhängig sein. Der Server stellt dann vorteilhafterweise dem Informationsprovider die entsprechenden Benutzerdaten zur Verfügung.

Bevorzugt ist vorgesehen das beschriebene System zur Bereitstellung von Nachrichten für einen Benutzer eines Wertstoffsammelbehälters wie beispielsweise Papier-, Flaschen- oder Kunststoffsammelbehälter anzuwenden.

Nach einer bevorzugten Ausführungsform erfolgt der Transfer von Daten zwischen der ersten und der dritten Kommunikationsschnittstelle über einen ersten Kommunikationskanal. Vorteilhafterweise nutzt der erste Kommunikationskanal zumindest abschnittsweise eine Drahtlostechnologie. Eine besonders bevorzugte Drahtlostechnologie ist die NFC-(Nahfeldkommunikations-) Technologie oder die RFID-( radio-frequency identification)Technologie. Es wäre jedoch auch denkbar weitere Drahtlostechnologien wie Bluetooth oder Wireless-LAN zu nutzen. Bluetooth- und Wireless-LAN-Verbindungen (WLAN) haben jedoch im Vergleich zu NFC und RFID wie oben beschrieben den Nachteil, dass die (erstmalige) Verbindung zweier Geräte von dem Benutzer manuell herbeigeführt werden muss.

Bevorzugt ist vorgesehen, dass der erste Kommunikationskanal zur Kommunikation zwischen der ersten und der dritten Kommunikationsschnittstelle auf einer einen geringen Energieverbrauch benötigende Drahtlostechnologie mit einer Reichweite unter 300 m basiert. Weiter bevorzugt liegt die Reichweite der für den ersten Kommunikationskanal genutzten Drahtlostechnologie unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm. Insbesondere ist bevorzugt, dass die für den ersten Kommunikationskanal genutzte Drahtlostechnologie ausgewählt ist aus einer Gruppe die NFC-Technologie, RFID-Technologie und optische Übertragungstechnologie umfasst.

Unter einem Kommunikationskanal soll ein Übertragungsweg, in diesem Fall für die (Identifikations-) Daten, verstanden werden. Ein solcher Übertragungsweg verbindet einen Sender und einen Empfänger. Dieser Sender beziehungsweise Empfänger ist vorteilhafterweise Teil der jeweiligen (ersten/zweiten/dritten) Kommunikationsschnittstelle. Demzufolge ist es vorteilhaft, wenn das Kommunikationsgerät und der Müllcontainer mit einem entsprechenden Sender beziehungsweise Empfänger der jeweiligen Technologie ausgestattet sind. Bevorzugt sind komplementäre Sender-Empfänger-Paare im Müllcontainer und Kommunikationsgerät sowie Kommunikationsgerät und Server vorhanden. Ein komplementäres Sender-Empfänger-Paar im Müllcontainer und Server ist nicht erforderlich und bevorzugt auch nicht vorhanden.

NFC erlaubt eine "verbindungsbehaftete" oder auch aktive Übertragung. Diese "aktiv-aktiv" oder auch als "Peer-To-Peer" bezeichnete Übertragung stellt eine bevorzugte Ausführungsform dar. Bevorzugt erzeugt sowohl der Initiator als auch der Empfänger ein hochfrequentes Magnetfeld und es wird zunächst ein sogenanntes "Handshake" durchgeführt, in dem eine Authentifizierung stattfindet und in dem verschiedene Einstellungen wie beispielsweise die optimale Übertragungsgeschwindigkeit ausgewählt werden. Bevorzugt wird erst anschließend der Datenaustausch durchgeführt. Aufgrund der beidseitigen Authentifizierung gilt diese aktive Übertragung als wesentlich sicherer im Vergleich zu der "passiven" Übertragung (bei der zumindest ein Kommunikationspartner nicht aktiv das hochfrequente Magnetfeld sendet).

Nach einer weiteren bevorzugten Ausführungsform basiert der zweite Kommunikationskanal zur Kommunikation zwischen der zweiten und der dritten Kommunikationsschnittstelle zumindest abschnittsweise auf einer Drahtlostechnologie mit einer maximalen Reichweite von über 30 m. Weiter bevorzugt liegt die Reichweite der für den zweiten Kommunikationskanal genutzten Drahtlostechnologie über 100 m, bevorzugt über 500 m, bevorzugt über 1 km, besonders bevorzugt mehrere km. Besonders bevorzugt ist die für den zweiten Kommunikationskanal genutzte Drahtlostechnologie eine Drahtlostechnologie, die ausgewählt ist aus einer Gruppe, die WLAN-Verbindung, Mobilfunkverbindung, GSM-Verbindung, UMTS-Verbindung, GPRS-Verbindung, LTE-Verbindung umfasst. Selbstverständlich kommen auch noch weitere Verbindungen wie Funkverbindungen, beispielsweise im ISM-Band, in Betracht. Auch unter dem zweiten Kommunikationskanal soll ein Übertragungsweg für die (Identifikations-) Daten verstanden werden.

In einer bevorzugten Ausführungsform ist vorgesehen, dass über die Schnittstelleneinrichtung zusätzliche Daten zwischen der zweiten und der ersten Kommunikationsschnittstelle übertragbar sind, welche bevorzugt ausgewählt sind aus einer Gruppe, die Zeitdaten, (Software-) Updates, Systeminformationen, Nutzungsverhalten, (erfolglose) Nutzungsversuche, (erfolglose) Anmeldeversuche, Füllstand des Müllcontainers und Standort des Müllcontainers umfasst. Die Schnittstelleneinrichtung des dem Benutzer zuordenbaren Kommunikationsgeräts kann in dieser Ausführungsform als Schnittstelle für den Datentransfer zwischen zweiter und erster Kommunikationsschnittstelle dienen. Eine Veränderung der Daten durch ein dem Benutzer zuordenbares Kommunikationsgerät ist dabei nicht erforderlich. Insbesondere bei Systemdaten und Softwareupdates ist die unveränderte Weiterleitung von Daten vorteilhaft. Eine eventuell notwendige Modulation der Daten zur Anpassung an die jeweils genutzte Übertragungstechnologie ist selbstverständlich durch das Kommunikationsgerät dennoch möglich.

Nach einer bevorzugten Ausführungsform weist der Müllcontainer eine Schleuseneinrichtung mit einer Verriegelungseinrichtung auf. Vorzugsweise authentifiziert der Authentifizierungsmanager anhand der Benutzerdaten den Benutzer. Vorteilhafterweise sendet dieser dann nach erfolgreicher (positiver) Authentifizierung ein Freigabesignal zum Entriegeln der Verriegelungseinrichtung über das Kommunikationsgerät an die erste Kommunikationsschnittstelle bzw. den Müllcontainer. Die Verriegelungseinrichtung ist vorzugsweise ein elektrischer Schließmechanismus. Vorteilhafterweise können die Informationsnachrichten vor oder nach dem Entriegeln der Verriegelungseinrichtung dem Benutzer zugestellt werden. Die Schleuseneinrichtung weist bevorzugt ein begrenztes Aufnahmevolumen auf, so dass bei einem einmaligen Öffnen lediglich eine begrenzte Menge an Müll in den Container eingeworfen werden kann. Optional können in der Schleuse und/oder dem Aufnahmebereich des Müllcontainers eine oder mehrere Einrichtungen zum Ermitteln der zugefügten und/oder vorhandenen Müllmenge vorhanden sein. Beispielsweise könnte es sich dabei um Einrichtungen zur Gewichts-und /oder Volumenermittlung handeln. Bevorzugt handelt es sich um eine Wiegeeinrichtung und/oder eine sonographische Füllhöhenermittlungseinrichtung.

Vorteilhafterweise umfassen die von der ersten Kommunikationsschnittstelle auf dem ersten Kommunikationskanal übertragenen Identifikationsdaten Daten zur Identifikation des Müllcontainers, beispielsweise einen Identifikationscode und/oder sonstige Daten zur Identifikation des entsprechenden Müllcontainers, beispielsweise den Standort.

Die zugeordneten Benutzerdaten können beispielsweise Informationen über die Zahlung der Gebühren oder Ähnliches beinhalten. Bei Nichtzahlung der Gebühren würde dann, vorteilhafterweise kein Freigabesignal gesendet werden beziehungsweise eine entsprechende Informationsnachricht dem Benutzer zugestellt werden.

Nach einer weiteren bevorzugten Ausführungsform weist der Müllcontainer Einrichtung zur Ermittlung von Positionsdaten wie beispielsweise eine GPS-Einrichtung auf. Die Positions-(z.B. GPS-) Daten können vorteilhafterweise zur Ortsbestimmung des Müllcontainers dienen. Diese Ortsbestimmung könnte zur Identifikation des einzelnen Müllcontainers genutzt werden. Ferner wäre der Müllcontainer aber auch bei Diebstahl oder Vandalismus leicht wiederauffindbar. Die Positionsdaten können beispielsweise ebenfalls über den indirekten Kommunikationskanal unter Einbeziehung des Kommunikationsgeräts des Benutzers von der ersten Kommunikationsschnittstelle (des Müllcontainers) zu der zweiten Kommunikationsschnittstelle (des Servers) übertragen werden.

Vorteilhafterweise weist der Müllcontainer eine Stromversorgung auf. Diese kann beispielsweise ein elektronisches Steuergerät und/oder die Verriegelungseinrichtung und/oder die GPS-Einrichtung und/oder andere Einrichtungen mit Strom versorgen. Ebenfalls kann Energie für die Datenübertragung von der ersten zur dritten Kommunikationsschnittstelle bereitgestellt werden. Die Stromversorgung ist vorteilhafterweise eine Batterie. Alternativ oder kumulativ könnte auch eine Solarzelle oder Ähnliches vorgesehen sein.

In einer Variante ist es denkbar, dass der Müllcontainer Sensoren umfasst, welche den Einwurf bestimmter Materialien wie beispielsweise Metalle detektieren. Bei einem Restmüllcontainer könnte somit der unerlaubte Einwurf solcher Materialien durch den Benutzer detektiert werden.

Die Sensordaten der zumindest einen Sensoreinrichtung werden vorzugsweise einer Steuereinheit des Servers zugeführt, welcher die Daten auswertet und eventuell weitere Schritte, beispielsweise die Benachrichtigung entsprechend zuständiger Stellen, einleitet.

Ein weiterer wesentlicher Aspekt der Erfindung ist ein Verfahren zur Steuerung eines Zugangs zu einem Müllcontainer für einen Benutzer, durch eine mit dem Müllcontainer verbundene elektronische Steuereinheit mit einer ersten Kommunikationsschnittstelle zum Senden und Empfangen von Daten. Dieses Verfahren umfasst die Schritte:
a) Initiieren eines Transfers von Identifikationsdaten von der ersten Kommunikationsschnittstelle zu einem einem Benutzer zuordenbaren und eine dritte Kommunikationsschnittstelle aufweisenden Kommunikationsgerät vor Nutzung des Müllcontainers;
b) Übermitteln der Identifikationsdaten für den Müllcontainer und des Benutzers von dem die dritte Kommunikationsschnittstelle aufweisenden Kommunikationsgerät zu einem eine zweite Kommunikationsschnittstelle aufweisenden Server;
c) Empfangen der Identifikationsdaten durch die zweite Kommunikationsschnittstelle und Zuführen der Identifikationsdaten zu einem Authentifizierungsmanager des Servers,
d) Zuordnung von Benutzerdaten aus einer Datenbank des Servers zu den Identifikationsdaten durch den Authentifizierungsmanager;
e) Generieren eines Signals, zum Gewähren oder Verweigern des Zugangs zu diesem Müllcontainer für diesen Benutzer,
f) Übertragung des Signals von der zweiten Kommunikationsschnittstelle an die dritte Kommunikationsschnittstelle und/oder das Kommunikationsgerät und optional Umwandlung des Signals in dem Kommunikationsgerät,
g) Übertragung eines Signals von der dritten Kommunikationsschnittstelle und/oder dem Kommunikationsgerät an die erste Kommunikationsschnittstelle,
h) Gewähren oder Verweigern des Zugangs zu diesem Müllcontainer für den Benutzer in Abhängigkeit des von dem an der ersten Kommunikationsschnittstelle empfangenen Signals.

Dieses Verfahren erlaubt die Kommunikation zwischen Müllcontainer und Server, ohne dass seitens des Müllcontainers eine energie- und kostenintensive Kommunikationsschnittstelle vorhanden sein muss, die die direkte Kommunikation mit dem entfernt angeordneten Server ermöglicht. Vielmehr kann eine zwischen dem einem Benutzer zuordenbaren und eine dritte Kommunikationsschnittstelle aufweisenden Kommunikationsgerät und dem Server bestehende Datenverbindung zur indirekten Kommunikation zwischen Müllcontainer und Server (mit-) genutzt werden.

In einer bevorzugten Variante des Verfahrens zeichnet sich dieses dadurch aus, dass zumindest einer der Schritte a) und b) durch zumindest abschnittsweise drahtlose Übermittlung von Daten erfolgt. Dies vereinfacht die Nutzung durch den Benutzer und damit auch die Akzeptanz für diese Technik. Bevorzugt erfolgen beide Schritte a) und b) durch zumindest abschnittsweise drahtlose Übermittlung von Daten, wodurch die Nutzung weiter vereinfacht werden kann.

In einer weiteren bevorzugten Verfahrensvariante werden für die Schritte a) und b) verschiedene Kommunikationskanäle genutzt. Dies erlaubt, dass die Reichweite der Kommunikationskanäle und der Energiebedarf der dafür genutzten Kommunikationsschnittstelle auf die jeweiligen Bedürfnisse angepasst werden kann. Somit wird eine besonders energiesparende und günstige (indirekte) Kommunikation zwischen der ersten und der zweiten Kommunikationsschnittstelle ermöglicht.

In einer weiteren bevorzugten Variante des Verfahrens ist vorgesehen, dass für den Schritt a) eine einen geringen Energieverbrauch benötigende Drahtlostechnologie mit einer Reichweite unter 300 m genutzt wird. Diese Verfahrensvariante ist besonders bevorzugt, da Schritt a) als besonders kritisch hinsichtlich des Energiebedarfs des Müllcontainers und der Kosten der Datenübertragung identifiziert wurde. Drahtlostechnologien mit geringer Reichweite erlauben üblicherweise geringen Energiebedarf bei dennoch vergleichsweise hoher Datenrate. Darüber hinaus sind derartige Drahtlostechnologien üblicherweise entgeltfrei nutzbar, so dass zumindest für diesen Abschnitt der Kommunikation zwischen erster und zweiter Kommunikationsschnittstelle keine Kosten anfallen. Bevorzugt liegt die Reichweite der für Schritt a) genutzten Drahtlostechnologie unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm, da diese geringen Reichweiten den Energiebedarf der ersten Kommunikationsschnittstelle weiter senken können. Insbesondere bevorzugt ist dafür eine Übertragungstechnologie, die ausgewählt ist aus einer Gruppe, die NFC-Technologie, RFID-Technologie und optische Übertragungstechnologie umfasst. Die sich hieraus ergebenden Vorteile wurden bereits oben vorrichtungsseitig beschrieben.

Bevorzugt ist weiterhin eine Verfahrensvariante, bei der für Schritt b) zumindest abschnittsweise eine Drahtlostechnologie mit einer maximalen Reichweite von über 30 m genutzt wird. Als maximale Reichweite soll in diesem Zusammenhang die Reichweite der Kommunikation zwischen zwei Kommunikationsschnittstellen unter üblichen Bedingungen ohne zwischen den Kommunikationsschnittstellen angeordnete Hindernisse verstanden werden. Eine solche Reichweite erlaubt üblicherweise die (drahtlose) Übertragung von Daten von dem Kommunikationsgerät zumindest bis zum nächstgelegenen Übergabepunkt, über welchen die Daten (evtl. über ein lokales Netzwerk (LAN)) in ein Weitverkehrsnetz (WAN) eingespeist werden und darüber an die zweite Kommunikationsschnittstelle weitergeleitet werden können. Der Übergabepunkt oder Zugangspunkt kann beispielsweise ein WLAN-Router oder ein Sendemast eines Mobilfunkanbieters sein. Eine große Reichweite der für Schritt b) zumindest abschnittsweise genutzten Drahtlostechnologie ermöglicht somit einen großen Bewegungsradius des Benutzers unter Beibehaltung der Drahtlosverbindung und daraus folgend auch eine große Variabilität in der Auswahl eines Standortes für den Müllcontainer. Für eine nochmals vergrößerte Variabilität des Standorts und die weitgehende Unabhängigkeit von bestehender Infrastruktur ist die Reichweite der für Schritt b) zumindest abschnittsweise genutzten Drahtlostechnologie bevorzugt über 100 m, bevorzugt über 500 m, bevorzugt über 1 km, besonders bevorzugt mehrere km. Als besonders geeignet hat sich die Nutzung einer Übertragungstechnologie herausgestellt, die ausgewählt ist aus einer Gruppe, die WLAN-Verbindung, Mobilfunkverbindung, GSM-Verbindung, UMTS-Verbindung, GPRS-Verbindung, LTE-Verbindung und DECT umfasst.

In den Schritten c) - e) werden die Identifikationsdaten des Müllcontainers und die Benutzerdaten abgeglichen und die Berechtigung des Benutzers zur Nutzung dieses Müllcontainers überprüft. Bei einem positiven Prüfungsergebnis wird ein Signal generiert, dass dem authentifizierten (und nun auch autorisierten) Benutzer den Zugang zu diesem Müllcontainer gewähren kann. Dazu wird die Übertragung dieses Signals an den Müllcontainer veranlasst.

In einer Verfahrensvariante ist vorgesehen, dass in Schritt h) bei einem Empfang eines Signals an der ersten Kommunikationsschnittstelle (4), welches die Gewährbarkeit des Zugangs zu diesem Müllcontainer (2) für den Benutzer kodiert, ein Steuersignal generiert wird, welches eine Verriegelungseinrichtung des Müllcontainers (2) entriegelt. Durch den Empfang eines solchen "Zugangsgewährungssignals" kann somit die Verriegelungseinrichtung des Müllcontainers entriegelt werden und dem Benutzer Zugang zum Müllcontainer, zum Müllaufnahmebehältnis oder einer Müllschleuse des Müllcontainers gewährt werden. Dies vereinfacht das Verfahren für den Benutzer, sodass er keine weiteren Authentifizierungsdaten, wie beispielsweise eine PIN, eingeben muss.

Verfahrensseitig ist bevorzugt, dass das in Schritt g) von der dritten Kommunikationsschnittstelle und/oder dem Kommunikationsgerät an die erste Kommunikationsschnittstelle übertragene Signal einen einmaligen oder rollenden Code umfasst. Dies ist bevorzugt, um zu verhindern, dass unbefugte die Authentifizierungsdaten mitlesen und diese Daten für einen unbefugten Zugang zum Müllcontainer nutzen. Durch die Verwendung eines einmaligen oder rollenden Codes sind die aktuellen Zugangsgewährungsdaten für den nächsten Zugangsversuch unbrauchbar und unbefugter Zugang mit diesen Daten zu einem späteren Zeitpunkt nicht mehr möglich.

In einer bevorzugten Verfahrensvariante wird als Kommunikationsgerät ein portables Datenverarbeitungsgerät verwendet. Als besonders geeignet haben sich Kommunikationsgeräte mit einer Anzeigeeinrichtung, wie beispielsweise ein Mobiltelefon, ein Smartphone, ein Tablet oder ein Laptop herausgestellt. Diese sind für den Benutzer leicht zu transportieren und werden - insbesondere das Mobiltelefon oder Smartphone -meist ohnehin vom Benutzer mitgeführt. Somit wird für ihn der Zugang zum Müllcontainer besonders einfach möglich. Besonders bevorzugt ist, dass die für Schritt a) genutzte Drahtlostechnologie eine Reichweite hat, die es ermöglicht, dass der Benutzer das Kommunikationsgerät nicht in der Hand halten oder in unmittelbare Nähe des Müllcontainers bringen muss, sondern beispielsweise in einer Tasche stecken lassen kann. Dies ist insbesondere deshalb vorteilhaft, da der Benutzer so beidhändig ein Mülltransportbehältnis tragen kann und dies nach erfolgreicher Authentifizierung (ggf. ebenfalls beidhändig) in den Müllcontainer leeren kann, ohne es für den Authentifizierungsprozess abstellen zu müssen.

Ein weiterer Vorteil bei der Nutzung eines der oben genannten Geräte als Kommunikationsgerät ergibt sich aus der Möglichkeit, Informationen für den Nutzer auf einer Anzeigeeinrichtung des Kommunikationsgeräts darstellen zu können. Bei diesen Informationen kann es sich beispielsweise um Informationen zum Füllstand und/oder der nächsten Leerung des Müllcontainers handeln. Ergänzend oder alternativ könnte auch Werbung und/oder Informationen zur Müllvermeidung oder Mülltrennung angezeigt werden. Durch derartige Zusatzinformationen könnte der Anreiz für die Nutzung dieser Technologie und der damit einhergehenden Bereitstellung eines (meist) von ihm (mit-) finanziertem (zweiten) Kommunikationskanals durch einen Benutzer erhöht werden.

Optional ist es möglich - wenn auch nicht bevorzugt - dass die Kommunikation über die beiden Kommunikationskanäle zeitlich versetzt erfolgt. Dies könnte beispielsweise notwendig sein, wenn die Kommunikation zwischen der dritten Kommunikationsschnittstelle und der zweiten Kommunikationsschnittstelle nicht möglich ist. Wird ein solcher "offline"-Zustand vom Kommunikationsgerät detektiert, könnte es selbständig den Zugang zum Müllcontainer auf Basis des letzten Ergebnisses der Authentifizierung durch den Server (erneut) gewähren oder verweigern. Somit wäre der Zugang für einen autorisierten Nutzer auch bei Nichtbestehen des zweiten Kommunikationskanals möglich.

Um Missbrauch durch aktive Unterbindung des zweiten Kommunikationskanals bei dieser Ausgestaltung zu vermeiden, könnte der Zugang durch selbständige Authentifizierung durch das Kommunikationsgerät auf eine bestimmte maximale Anzahl (z.B. kleiner 10, kleiner 5, bevorzugt kleiner 3, weiter bevorzugt kleiner 2) beschränkt werden.

Sollten bestimmte Benutzer vollständig oder temporär von der Nutzung eines Müllcontainers ausgeschlossen werden, könnte auch im Müllcontainer selbst eine Liste mit nicht zugelassenen Benutzern abgespeichert sein. Versucht ein auf dieser Liste hinterlegter Benutzer mit einem ihm zugeordneten Kommunikationsgerät eine Kommunikation über den Kommunikationskanal zwischen der ersten Kommunikationsschnittstelle und der dritten Kommunikationsschnittstelle aufzubauen, kann dieser Versuch von der dritten Kommunikationsschnittstelle unterbunden werden, oder der Zugang zu diesem Müllcontainer für diesen Benutzer verweigert werden, solange nicht ein anderslautendes Signal über den Kommunikationskanal zwischen der zweiten Kommunikationsschnittstelle und der dritten Kommunikationsschnittstelle übermittelt wird. Dadurch könnte der Benutzer von der Liste nicht zugelassener Benutzer entfernt werden und ihm dementsprechend Zugang gewährt werden. Das Entfernen eines Benutzers von der Liste nicht zugelassener Benutzer kann auch bei jeglicher anderen Art der Datenverbindung zwischen Müllcontainer und Server erfolgen, beispielsweise während einer Benutzung des Müllcontainers durch einen anderen Benutzer über dessen Kommunikationsgerät.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.
In den Figuren zeigen:

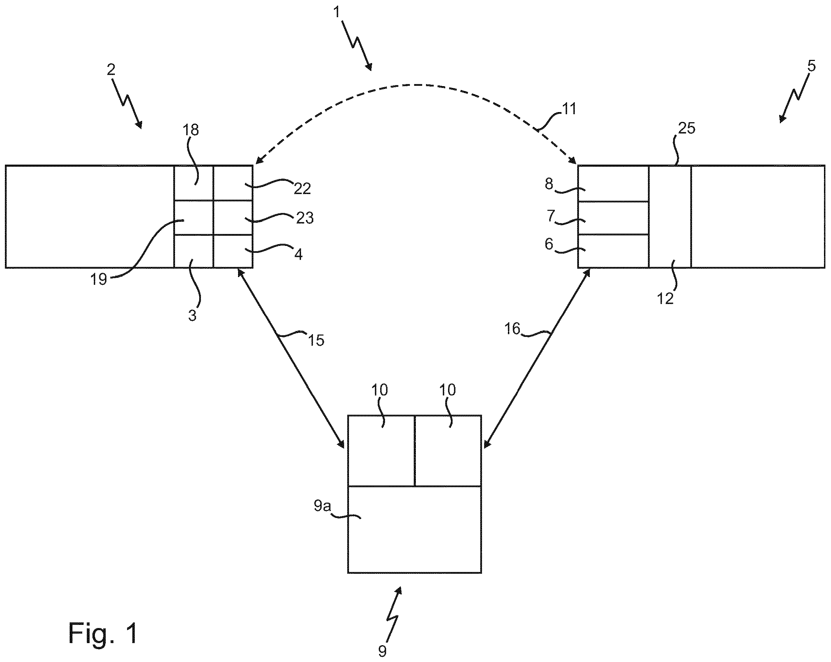

- Fig.1: eine Prinzipskizze des Systems zur Bereitstellung von Nachrichten für einen Benutzer eines Müllcontainers nach einer Ausführungsform;

In der Figur 1 wird ein System (1) zur Kontrolle und Steuerung des Zugangs für einen Benutzer zu einem Müllcontainer (2) umfassend einen Müllcontainer (2) und einen von dem Müllcontainer beabstandeten Server (5) dargestellt. Der Müllcontainer (2) umfasst eine elektronische Steuereinheit (3) mit einer ersten Kommunikationsschnittstelle (4) zum Senden und Empfangen von Daten. Der von dem Müllcontainer beabstandete Server (5) weist eine zweite Kommunikationsschnittstelle (6), einen Authentifizierungsmanager (7) und eine Datenbank (8) auf. Zur Identifizierung eines Benutzers vor der Nutzung des Müllcontainers (2) ist zwischen der ersten Kommunikationsschnittstelle (4) und einer dritten Kommunikationsschnittstelle (10) eines einem Benutzer (nicht gezeigt) zuordenbaren Kommunikationsgeräts (9) ein Transfer von Daten (11) initiierbar. Weiterhin ist zwischen der dritten Kommunikationsschnittstelle (10) und der zweiten Kommunikationsschnittstelle (6) ein Transfer von Daten (11) initiierbar. Die erste Kommunikationsschnittstelle (4) weist somit keine Einrichtung zum direkten Transfer von Daten (11) an zweite Kommunikationsschnittstelle (6) auf, sondern das dem Benutzer zuordenbare Kommunikationsgerät (9) weist eine Schnittstelleneinrichtung auf, über welche eine indirekte Datenübertragung zwischen erster Kommunikationsschnittstelle (4) und zweiter Kommunikationsschnittstelle (6) initiierbar ist. Dies erfolgt im Beispiel über zwei verschiedene Kommunikationskanäle (15 und 16). Der Authentifizierungsmanager (7) ordnet Benutzerdaten aus der Datenbank (8) den Daten (11) zuund gibt auf Basis dieser Zuordnung den Zugang zu diesem Müllcontainer (2) für diesen Benutzer frei oder verweigert ihn.

In diesem Beispiel ist das Kommunikationsgerät (9) beispielsweise ein Smartphone, welches eine Anzeigeeinrichtung (9a) aufweist. Auf diese können Zusatzinformationen für den Benutzer dargestellt werden. Diese können über den Kommunikationskanal (16) vom Server (5) bereitgestellt werden. In die Darstellung können jedoch auch Parameter einfließen, welche ursprünglich vom Müllcontainer (2) stammen und über den Kommunikationskanal (15) an das Kommunikationsgerät (9) übermittelt wurden. Optional können diese Daten auch über den Kommunikationskanal (16) zum Server (5) weitergeleitet werden und dort vor einer Anzeige auf der Anzeigeeinrichtung (9a) weiterverarbeitet werden. Beispielsweise wäre so die Anzeige des aktuellen Füllstandes des Müllcontainers (2) und Statistiken zur bisherigen Nutzung dieses Müllcontainers (2) durch den Benutzer möglich.

Bei dem Kommunikationsgerät (9) handelt es sich beispielsweise um ein portables Datenverarbeitungsgerät wie beispielsweise ein Mobiltelefon, ein Smartphone, ein Tablet oder ein Laptop und dieses weist eine Anzeigevorrichtung (9a) auf. Wichtig ist, dass das Kommunikationsgerät (9) die dritte Kommunikationsschnittstelle (10) umfasst. Diese dritte Kommunikationsschnittstelle (10) ist in Figur 1 zweimal dargestellt. Dies soll verdeutlichen, dass es sich auch um verschiedene Kommunikationsschnittstellen (10) handeln kann. Wie oben beschrieben ist, unterscheiden sich nämlich bevorzugt die beiden Kommunikationskanäle (15, 16) zur Kommunikation zwischen der ersten Kommunikationsschnittstelle (4) (des Müllcontainers (2)) und der dritten Kommunikationsschnittstelle (10) (des Kommunikationsgeräts (9)) einerseits und zur Kommunikation zwischen der dritten Kommunikationsschnittstelle (10) (des Kommunikationsgeräts (9)) und der zweiten Kommunikationsschnittstelle (6) (des Servers (5)) andererseits.

Anders als aus dem Stand der Technik bekannt wird somit eine Kommunikation zwischen der ersten Kommunikationsschnittstelle (4) (des Müllcontainers (2)) und der zweiten Kommunikationsschnittstelle (6) (des Servers (5)) möglich, ohne dass der Müllcontainer (oder die ersten Kommunikationsschnittstelle (4)) für eine weitreichende Kommunikation ausgelegt sein muss. Dies ermöglicht signifikante Energieeinsparungen während des Betriebs. Außerdem kann für die Kurzstreckenkommunikation zwischen der ersten Kommunikationsschnittstelle (4) (des Müllcontainers (2)) und der dritten Kommunikationsschnittstelle (10) (des Kommunikationsgeräts (9)) auf kostenfrei nutzbare Kommunikationskanäle (15) zurückgegriffen werden. Die Nutzung von (meist kostenpflichtigen) Mobilfunkverbindungen, beispielsweise eine GSM-Verbindung oder eine UMTS-Verbindung oder eine GPRS-Verbindung oder eine LTE-Verbindung ist nicht notwendig. Vielmehr kann beispielsweise eine NFC-Technologie genutzt werden.

Die dritte Kommunikationsschnittstelle (10) weist jedoch eine weitere Sende- und/oder Empfangseinrichtungen auf, welche zumindest abschnittsweise eine Drahtlostechnologie nutzt, die Datentransfer über eine große Strecke ermöglicht. Dadurch kann (wie in Figur 1 schematisch dargestellt) eine direkte Datenübertragung zum Server erfolgen, jedoch wird dazu bevorzugt eine bestehende Netzwerkinfrastruktur wie beispielsweise ein W-LAN oder Mobilfunknetz genutzt. Abschnittsweise können dabei die Daten selbstverständlich auch durch Kabel übertragen werden.

Der Müllcontainer umfasst eine Schleuseneinrichtung (18) mit einer Verriegelungseinrichtung (19). Der Müllcontainer weist weiterhin die elektronische Steuereinheit (3) mit der ersten Kommunikationsschnittstelle (4) auf. Diese erste Kommunikationsschnittstelle (4) weist Sende- und/oder Empfangseinrichtungen auf, welche eine Drahtlostechnologie, beispielsweise eine NFC-Technologie nutzen. Ferner kann die erste Kommunikationsschnittstelle (4) weitere Sende- und/oder Empfangseinrichtungen aufweisen.

Der Server (5) weist den Authentifizierungsmanager (7), die Datenbank (8) und die zweite Kommunikationsschnittstelle (6) auf. Diese zweite Kommunikationsschnittstelle (6) weist eine weitreichende Sende- und Empfangseinrichtung auf. Diese kann beispielsweise (zumindest abschnittsweise) eine Mobilfunkverbindung, beispielsweise eine GSM-Verbindung oder eine UMTS-Verbindung oder eine GPRS-Verbindung oder eine LTE-Verbindung, nutzen. So wäre es beispielsweise denkbar, dass das Kommunikationsgeräts (9) des Benutzers über ein Mobilfunknetz eine Internetverbindung zu dem Server aufbaut. Der Server selbst braucht in diesem Fall keine eigene Mobilfunkverbindung aufzubauen und auch die zweite Kommunikationsschnittstelle (6) braucht nicht zur Ausbildung einer Mobilfunkverbindung geeignet zu sein. Ausreichend ist, dass seitens des Kommunikationsgeräts (9) des Benutzers (z.B. über ein Mobilfunknetz) eine abschnittsweise drahtlose Verbindung zu dem Server aufbaubar ist.

Diese übertragenen (Identifikations-) Daten (11) können sowohl Identifikationsdaten des Benutzers als auch Identifikationsdaten des Müllcontainers umfassen. Im Server werden die über den Kommunikationskanal (16) erhaltenen Daten dem Authentifizierungsmanager (7) des Servers (5) zugeführt. Der Authentifizierungsmanager (7) ordnet dann die empfangenen Identifikationsdaten (11) Benutzerdaten (12) aus der Datenbank (10) zu. Nach erfolgreicher Authentifikation wird ein Freigabesignal zum Entriegeln der Verriegelungseinrichtung (19) an den Müllcontainer (2) übermittelt. Dies erfolgt über die beiden Kommunikationskanäle (15 und 16). Beide Kommunikationskanäle (15 und 16) sind (wie durch die Doppelpfeile angedeutet ist) bevorzugt bidirektionale Kommunikationskanäle.

Optional kann der Müllcontainer (2) mit einer GPS-Einrichtung zur Ortsbestimmung oder zumindest einer Sensoreinrichtung (22) ausgestattet sein. Die Sensoreinrichtung (22) kann Sensoren zur Überwachung der Temperatur im Innenraum des Müllcontainers (2), zur Detektion von Bewegungen im Innenraum des Müllcontainers (2), zur Detektion von Bewegungen des Müllcontainers (2) selbst, zur Anzeige des Füllstands, zur Bestimmung des Gewichts des eingeworfenen Mülls oder zur Detektion bestimmter Materialein in dem eingeworfenen Müll. Diese GPS-/ Sensordaten werden vorzugsweise zusammen mit den oben beschriebenen Daten oder separat auf davon auf den selben Kommunikationskanälen (15 und 16) von der ersten Kommunikationsschnittstelle (4) des Müllcontainers (2) zu der zweiten Kommunikationsschnittstelle (6) beziehungsweise dem Server (5) übertragen.

Die durch die zweite Kommunikationsschnittstelle (6) empfangenen GPS-/ Sensordaten werden vorzugsweise einer Steuereinheit des Servers zugeführt, welcher die Daten auswertet und eventuell weitere Schritte, beispielsweise die Benachrichtigung entsprechend zuständiger Stellen, einleitet. Entsprechende Kontaktdaten können in dem Speicher (25) abgelegt sein.

Die Erfindung ist durch die unabhängigen Ansprüche definiert. Bevorzugte Ausführungsformen sind durch die abhängigen Ansprüche definiert.

### Bezugszeichenliste

- 1: System
- 2: Müllcontainer
- 3: elektronische Steuereinheit
- 4: erste Kommunikationsschnittstelle
- 5: Server
- 6: zweite Kommunikationsschnittstelle
- 7: Authentifizierungsmanager
- 8: Datenbank
- 9: Kommunikationsgerät
- 9a: Anzeigeeinrichtung
- 10: dritte Kommunikationsschnittstelle
- 11: (Identifikations-) Daten
- 12: Benutzerdaten
- 13: Informationsprovider
- 15: erster Kommunikationskanal
- 16: zweiter Kommunikationskanal
- 18: Schleuseneinrichtung
- 19: Verriegelungseinrichtung
- 22: GPS und/oder Sensoreinrichtung
- 23: Stromversorgung
- 25: Speicher

## Patentansprüche

1. System (1) zur Kontrolle und Steuerung des Zugangs für einen Benutzer zu einem Müllcontainer (2), umfassend einen Müllcontainer (2) mit einer elektronischen Steuereinheit (3), mit einer ersten Kommunikationsschnittstelle (4) zum Senden und Empfangen von Daten und einen von dem Müllcontainer beabstandeten Server (5), welcher eine zweite Kommunikationsschnittstelle (6), einen Authentifizierungsmanager (7) und eine Datenbank (8) aufweist, wobei zur Identifizierung eines Benutzers vor der Nutzung des Müllcontainers (2) zwischen der ersten Kommunikationsschnittstelle (4) und einer dritten Kommunikationsschnittstelle (10) eines dem Benutzer zuordenbaren Kommunikationsgeräts (9) ein Transfer von Identifikationsdaten (11) initiierbar ist und zwischen der dritten Kommunikationsschnittstelle (10) und der zweiten Kommunikationsschnittstelle (6) ein Transfer von Identifikationsdaten (11) initiierbar ist, wobei die erste Kommunikationsschnittstelle (4) keine Einrichtung zur direkten Datenübertragung an die zweite Kommunikationsschnittstelle (6) aufweist, wobei das dem Benutzer zuordenbare Kommunikationsgerät (9) eine Schnittstelleneinrichtung aufweist, über welche eine indirekte Datenübertragung zwischen der ersten Kommunikationsschnittstelle (4) und der zweiten Kommunikationsschnittstelle (6) initiierbar ist, wobei der Authentifizierungsmanager (7) Benutzerdaten aus der Datenbank (8) den Identifikationsdaten (11) zuordnet und auf Basis dieser Zuordnung den Zugang zu diesem Müllcontainer (2) für diesen Benutzer freigibt oder verweigert,
**dadurch gekennzeichnet, dass**
die Kommunikation über einen ersten Kommunikationskanal (15) und einen davon verschiedenen zweiten Kommunikationskanal (16) zeitlich versetzt erfolgbar ist, wobei vom Kommunikationsgerät (9) ein offline-Zustand detektierbar ist, bei welchem die Kommunikation zwischen der dritten Kommunikationsschnittstelle (10) und der zweiten Kommunikationsschnittstelle (6) nicht möglich ist, wobei durch das Kommunikationsgerät (9) im offline-Zustand der Zugang zum Müllcontainer (2) selbständig auf Basis des letzten Ergebnisses der Authentifizierung durch den Server (5) gewährbar oder verweigerbar ist.

2. System nach Anspruch 1,
**dadurch gekennzeichnet, dass**
das Kommunikationsgerät (9) ein portables Datenverarbeitungsgerät, bevorzugt mit einer Anzeigeeinrichtung (9a), beispielsweise ein Mobiltelefon, ein Smartphone, ein Tablet oder ein Laptop ist.

3. System nach einem der Ansprüche 1 oder 2,
**dadurch gekennzeichnet, dass**
der Transfer von Daten (11) zwischen der ersten (4) und der dritten Kommunikationsschnittstelle (10) über den ersten Kommunikationskanal (15) erfolgt, welcher von dem zur Kommunikation zwischen der zweiten (6) und der dritten Kommunikationsschnittstelle (10) eingerichteten zweiten Kommunikationskanal (16) verschieden ist.

4. System nach einem der vorhergehenden Ansprüche,
**dadurch gekennzeichnet, dass**
zumindest einer, bevorzugt beide der Kommunikationskanäle (15, 16) zur Kommunikation zwischen der ersten (4) und der zweiten Kommunikationsschnittstelle (6) oder zwischen der zweiten (6) und der dritten Kommunikationsschnittstelle (10) zumindest abschnittsweise eine Drahtlostechnologie nutzt.

5. System nach einem der vorhergehenden Ansprüche,
**dadurch gekennzeichnet, dass**
der erste Kommunikationskanal (15) zur Kommunikation zwischen der ersten (4) und der dritten Kommunikationsschnittstelle (6) auf einer einen geringen Energieverbrauch benötigenden Drahtlostechnologie mit einer Reichweite unter 300 m, bevorzugt unter 100 m, bevorzugt unter 50 m, bevorzugt unter 30 m, bevorzugt unter 10m, bevorzugt unter 5 m, bevorzugt unter 3 m, bevorzugt unter 1 m, besonders bevorzugt unter 50 cm basiert, bevorzugt einer Drahtlostechnologie, die ausgewählt ist aus einer Gruppe, die NFC-Technologie, RFID-Technologie und optische Übertragungstechnologie umfasst.

6. System nach einem der vorhergehenden Ansprüche,
**dadurch gekennzeichnet, dass**
der zweite Kommunikationskanal (16) zur Kommunikation zwischen der zweiten (6) und der dritten Kommunikationsschnittstelle (10) zumindest abschnittsweise auf einer Drahtlostechnologie mit einer maximalen Reichweite von über 30 m, bevorzugt über 100 m, bevorzugt über 500 m, bevorzugt über 1 km, besonders bevorzugt mehrere km basiert, bevorzugt auf einer Übertragungstechnologie, die ausgewählt ist, aus einer Gruppe, die WLAN-Verbindung, Mobilfunkverbindung, GSM-Verbindung, UMTS-Verbindung, GPRS-Verbindung, LTE-Verbindung umfasst.

7. System nach einem der vorhergehenden Ansprüche,
**dadurch gekennzeichnet, dass**
über die Schnittstelleneinrichtung zusätzliche Daten zwischen der zweiten (6) und der ersten Kommunikationsschnittstelle (4) übertragbar sind, welche bevorzugt ausgewählt sind aus einer Gruppe, die Zeitdaten, Updates, Systeminformationen, Nutzungsverhalten, (erfolglose) Nutzungsversuche, (erfolglose) Anmeldeversuche, Füllstand des Müllcontainers und Standort des Müllcontainers umfasst.

8. System nach einem der vorhergehenden Ansprüche,
**dadurch gekennzeichnet, dass**
die Schnittstelleneinrichtung des dem Benutzer zuordenbaren Kommunikationsgeräts (9) eine Datenverarbeitungseinrichtung aufweist, welche zur Modulation von Daten zur Übertragung auf unterschiedlichen Kommunikationskanälen (15, 16) und/oder eine Kodierung und/oder eine Dekodierung der von einer ersten oder zweiten Kommunikationsschnittstelle (4, 6) empfangenen Daten vor deren Weiterleitung an die jeweils andere der ersten oder zweiten Kommunikationsschnittstelle (4, 6) eingerichtet ist.

9. Verfahren zur Steuerung eines Zugangs zu einem Müllcontainer (2) für einen Benutzer, durch eine mit dem Müllcontainer (2) verbundene elektronische Steuereinheit (3) mit einer ersten Kommunikationsschnittstelle (4) zum Senden und Empfangen von Daten, umfassend die Schritte:
a) Initiieren eines Transfers von Identifikationsdaten (11) von der ersten Kommunikationsschnittstelle (4) zu einem dem Benutzer zuordenbaren und eine dritte Kommunikationsschnittstelle (10) aufweisenden Kommunikationsgerät (9) vor Nutzung des Müllcontainers (2);
b) Übermitteln der Identifikationsdaten (11) für den Müllcontainer (2) und des Benutzers von dem die dritte Kommunikationsschnittstelle (10) aufweisenden Kommunikationsgerät (9) zu einem eine zweite Kommunikationsschnittstelle (6) aufweisenden Server (5);
c) Empfangen der Identifikationsdaten (11) durch die zweite Kommunikationsschnittstelle (6) und Zuführen der Identifikationsdaten (11) zu einem Authentifizierungsmanager (9) des Servers (5),
d) Zuordnung von Benutzerdaten (12) aus einer Datenbank (8) des Servers (5) zu den Identifikationsdaten (11) durch den Authentifizierungsmanager (9);
e) Generieren eines Signals zum Gewähren oder Verweigern des Zugangs zu diesem Müllcontainer (2) für diesen Benutzer,
f) Übertragung des Signals von der zweiten Kommunikationsschnittstelle (6) an die dritte Kommunikationsschnittstelle (10) und/oder das Kommunikationsgerät (9) und optional Umwandlung des Signals in dem Kommunikationsgerät (9),
g) Übertragung eines Signals von der dritten Kommunikationsschnittstelle (10) und/oder dem Kommunikationsgerät (9) an die erste Kommunikationsschnittstelle (4),
h) Gewähren oder Verweigern des Zugangs zu diesem Müllcontainer (2) für den Benutzer in Abhängigkeit des von dem an der ersten Kommunikationsschnittstelle (4) empfangenen Signals,
wobei der Schritt a) über einen ersten Kommunikationskanal (15) erfolgt, welcher von dem in Schritt b) verwendeten zweiten Kommunikationskanal (16) verschieden ist, wobei die Kommunikation über die beiden Kommunikationskanäle zeitlich versetzt erfolgt, wenn ein offline-Zustand vom Kommunikationsgerät detektiert wird, wenn eine Kommunikation zwischen der dritten Kommunikationsschnittstelle und der zweiten Kommunikationsschnittstelle nicht möglich ist, wobei mittels des Kommunikationsgeräts (9) selbständig der Zugang zum Müllcontainer auf Basis des letzten Ergebnisses der Authentifizierung durch den Server gewährt oder verweigert wird.

10. Verfahren nach Anspruch 9,
**dadurch gekennzeichnet, dass**
zumindest einer, bevorzugt beide der Schritte a) und b) durch zumindest abschnittsweise drahtlose Übermittlung von Daten erfolgt.

11. Verfahren nach Anspruch 9 oder 10,
**dadurch gekennzeichnet, dass**
der Zugang durch selbständige Authentifizierung durch das Kommunikationsgerät auf eine bestimmte maximale Anzahl beschränkt ist, wobei die bestimmte maximale Anzahl kleiner 10, bevorzugt kleiner 5, weiter bevorzugt kleiner 3, insbesondere bevorzugt kleiner 2) ist..

12. Verfahren nach einem der Ansprüche 9 bis 11,
**dadurch gekennzeichnet, dass**
für den Schritt a) eine einen geringen Energieverbrauch benötigende Drahtlostechnologie mit einer Reichweite unter 300 m, bevorzugt unter 100 m, bevorzugt unter 50 m, bevorzugt unter 30 m, bevorzugt unter 10m, bevorzugt unter 5 m, bevorzugt unter 3 m, bevorzugt unter 1 m, besonders bevorzugt unter 50 cm genutzt wird, bevorzugt eine Übertragungstechnologie die ausgewählt ist aus einer Gruppe die NFC-Technologie, RFID-Technologie und optische Übertragungstechnologie umfasst und für Schritt b) zumindest abschnittsweise eine Drahtlostechnologie mit einer maximalen Reichweite von über 30 m, bevorzugt über 100 m, bevorzugt über 500 m, bevorzugt über 1 km, besonders bevorzugt mehrere km genutzt wird, bevorzugt eine Übertragungstechnologie, die ausgewählt ist aus einer Gruppe, die WLAN-Verbindung, Mobilfunkverbindung, GSM-Verbindung, UMTS-Verbindung, GPRS-Verbindung, LTE-Verbindung umfasst.

13. Verfahren nach einem der Ansprüche 9 bis 11,
**dadurch gekennzeichnet, dass**
in Schritt h) bei einem Empfang eines Signals an der ersten Kommunikationsschnittstelle (4), welches die Gewährbarkeit des Zugangs zu diesem Müllcontainer (2) für den Benutzer kodiert, ein Steuersignal generiert wird, welches eine Verriegelungseinrichtung des Müllcontainers (2) entriegelt.

14. Verfahren nach einem der Ansprüche 9 bis 13,
**dadurch gekennzeichnet, dass**
das in Schritt g) von der dritten Kommunikationsschnittstelle (10) und/oder dem Kommunikationsgerät (9) an die erste Kommunikationsschnittstelle (4) übertragene Signal einen einmaligen oder rollenden Code umfasst.

15. Verfahren nach einem der Ansprüche 9 bis 14,
**dadurch gekennzeichnet, dass**
als Kommunikationsgerät (9) ein portables Datenverarbeitungsgerät, bevorzugt mit einer Anzeigeeinrichtung (9a), beispielsweise ein Mobiltelefon, ein Smartphone, ein Tablet oder ein Laptop verwendet wird.

## Claims

1. System (1) for checking and controlling access for a user to a refuse container (2), comprising a refuse container (2) having an electronic control unit (3), which comprises a first communication interface (4) for sending and receiving data and a server (5) that is arranged at a distance from the refuse container and comprises a second communication interface (6), an authentication manager (7) and a database (8), it being possible to initiate a transfer of identification data (11) between the first communication interface (4) and a third communication interface (10) of a communication apparatus (9), which apparatus can be assigned to a user, in order to identify a user before using the refuse container (2), and it being possible to initiate a transfer of identification data (11) between the third communication interface (10) and the second communication interface (6), wherein
the first communication interface (4) does not comprise any devices for directly transferring data to the second communication interface (6), the communication apparatus (9) that can be assigned to the user comprising an interface device, via which indirect data transfer can be initiated between the first communication interface (4) and the second communication interface (6), the authentication manager (7) assigning user data from the database (8) to the identification data (11) and giving or denying said user access to said refuse container (2) on the basis of this assignment,
**characterised in that**
the communication takes place via a first communication channel (15) and a second communication channel (16), which is different therefrom, in a time-displaced manner, wherein an offline state is detectable by the communication apparatus (9), in which offline state a communication between the third communication interface (10) and the second communication interface (6) is not possible, wherein access to the refuse container (2) can be granted or denied by the communication apparatus (9) by itself in the offline state on the basis of the last result of the authentication by the server.

2. System according to claim 1,
**characterised in that**
the communication apparatus (9) is a portable data processing apparatus, preferably comprising a display device (9a), for example a mobile phone, a smartphone, a tablet or a laptop.

3. System according to either claim 1 or claim 2,
**characterised in that**
data (11) is transferred between the first (4) and the third (10) communication interface via the first communication channel (15), which is different from the second communication channel (16) that is set up for communication between the second (6) and the third (10) communication interface.

4. System according to any of the preceding claims,
**characterised in that**
at least portions of at least one, preferably both, of the communication channels (15, 16) use wireless technology for communication between the first (4) and the second (6) communication interface or between the second (6) and the third (10) communication interface.

5. System according to any of the preceding claims,
**characterised in that**
the first communication channel (15) for communication between the first (4) and the third (6) communication interface is based on wireless technology having a low energy consumption and a range of less than 300 m, preferably less than 100 m, preferably less than 50 m, preferably less than 30 m, preferably less than 10 m, preferably less than 5 m, preferably less than 3 m, preferably less than 1 m, and particularly preferably less than 50 cm, preferably wireless technology selected from a group comprising NFC technology, RFID technology and optical transmission technology.

6. System according to any of the preceding claims,
**characterised in that**
at least portions of the second communication channel (16) for communication between the second (6) and the third (10) communication interface are based on wireless technology having a maximum range of more than 30 m, preferably more than 100 m, preferably more than 500 m, preferably more than 1 km, particularly preferably several km, preferably on transmission technology selected from a group comprising a WLAN connection, mobile connection, GSM connection, UMTS connection, GPRS connection or LTE connection.

7. System according to any of the preceding claims,
**characterised in that**
additional data can be transferred between the second (6) and the first (4) communication interface via the interface device, which data is preferably selected from a group comprising time data, updates, system information, usage behaviour, (unsuccessful) attempted uses, (unsuccessful) attempted logins, fill level of the refuse container and location of the refuse container.

8. System according to any of the preceding claims,
**characterised in that**
the interface device of the communication apparatus (9), which apparatus can be assigned to the user, comprises a data processing device, which is designed to modulate data in order to transfer it to different communication channels (15, 16) and/or to encode and/or decode the data received by a first or second communication interface (4, 6) before it is forwarded to the other communication interface in each case, either the first or second communication interface (4, 6).

9. Method for controlling access to a refuse container (2) for a user by means of an electronic control unit (3) that is connected to the refuse container (2) and comprises a first communication interface (4) for sending and receiving data, said method comprising the steps of:
a) initiating a transfer of identification data (11) from the first communication interface (4) to a communication apparatus (9), which apparatus can be assigned to the user and comprises a third communication interface (10), before the refuse container (2) is used;
b) transferring the identification data (11) relating to the refuse container (2) and to the user from the communication apparatus (9), which comprises the third communication interface (10), to a server (5) having a second communication interface (6);
c) receiving the identification data (11) by means of the second communication interface (6) and supplying the identification data (11) to an authentication manager (9) of the server (5);
d) assigning user data (12) from a database (8) of the server (5) to the identification data (11) by means of the authentication manager (9);
e) generating a signal in order to grant or deny access to said refuse container (2) for said user;
f) transmitting the signal from the second communication interface (6) to the third communication interface (10) and/or the communication apparatus (9) and optionally converting the signal inside the communication apparatus (9);
g) transmitting a signal from the third communication interface (10) and/or the communication apparatus (9) to the first communication interface (4);
h) granting or denying access to said refuse container (2) for the user on the basis of the signal received at the first communication interface (4) wherein step a) takes place via a first communication channel (15), which is different from the second communication channel (15) used in step b), wherein the communication takes place in a time-displaced manner, if an offline state is detected by the communication apparatus, if a communication between the third communication interface and the second communication interface is not possible, wherein access to the refuse container is granted or denied by the communication apparatus (9) by itself on the basis of the last result of the authentication by the server.

10. Method according to claim 9,
**characterised in that**
at least one, preferably both, of steps a) and b) is/are carried out by the transmission of data, which transmission is wireless at least in portions.

11. Method according to either claim 9 or claim 10,
**characterised in that**
by means of independent authentication by the communication apparatus, access is restricted to a specific maximum number, wherein the specific maximum number is less than 10, preferably less than 5, more preferably less than 3, in particular preferably less than 2.

12. Method according to any of claims 9 to 11,
**characterised in that**
wireless technology that has a low energy consumption and a range of less than 300 m, preferably less than 100 m, preferably less than 50 m, preferably less than 30 m, preferably less than 10 m, preferably less than 5 m, preferably less than 3 m, preferably less than 1 m, particularly preferably less than 50 cm, is used for step a), preferably transmission technology that is selected from a group comprising NFC technology, RFID technology and optical transmission technology, and
wireless technology having a maximum range of more than 30 m, preferably more than 100 m, preferably more than 500 m, preferably more than 1 km, particularly preferably several km, is used at least in portions for step b), preferably transmission technology that is selected from a group comprising a WLAN connection, mobile connection, GSM connection, UMTS connection, GPRS connection or LTE connection.

13. Method according to any of claims 9 to 12,
**characterised in that**,
in step h), when a signal is received at the first communication interface (4), which encodes the allowability of access for the user to said refuse container (2), a control signal is generated that unlocks an interlocking device of the refuse container (2).

14. Method according to any of claims 9 to 13,
**characterised in that**
the signal transmitted from the third communication interface (10) and/or the communication apparatus (9) to the first communication interface (4) in step g) comprises a one-time or rolling code.

15. Method according to any of claims 9 to 14,
**characterised in that**
a portable data processing apparatus, preferably having a display device (9a), for example a mobile phone, a smartphone, a tablet or a laptop, is used as the communication apparatus (9).

## Revendications

1. Système (1) pour le contrôle et la commande de l'accès pour un utilisateur à un conteneur à ordures (2), comprenant un conteneur à ordures (2) ayant une unité de commande électronique (3), ayant une première interface de communication (4) pour l'envoi et la réception de données, et un serveur (5) à distance du conteneur à ordures, lequel serveur présente une deuxième interface de communication (6), un gestionnaire d'authentification (7) et une base de données (8), où, pour l'identification d'un utilisateur avant l'utilisation du conteneur à ordures (2), un transfert de données d'identification (11) est initialisable entre la première interface de communication (4) et une troisième interface de communication (10) d'un dispositif de communication (9) attribuable à l'utilisateur, et un transfert de données d'identification (11) est initialisable entre la troisième interface de communication (10) et la deuxième interface de communication (6), où la première interface de communication (4) ne comporte pas de dispositif pour le transfert direct de données à la deuxième interface de communication (6), où le dispositif de communication (9) attribuable à l'utilisateur présente un dispositif d'interface par lequel un transfert indirect de données entre la première interface de communication (4) et la deuxième interface de communication (6) est initialisable, où le gestionnaire d'authentification (7) attribue des données d'utilisateur provenant de la base de données (8) aux données d'identification (11) et, sur la base de cette attribution, libère ou refuse l'accès à ce conteneur à ordures (2) pour cet utilisateur,
**caractérisé par le fait que**
la communication peut avoir lieu de façon décalée dans le temps par l'intermédiaire d'un premier canal de communication (15) et d'un second canal de communication (16) différent de celui-ci, où par le dispositif de communication (9), est détectable un état hors ligne lors duquel la communication entre la troisième interface de communication (10) et la deuxième interface de communication (6) n'est pas possible, où par le dispositif de communication (9) dans l'état hors ligne, l'accès au conteneur à ordures (2) est apte à être permis ou refusé de façon autonome sur la base du dernier résultat de l'authentification par le serveur(5).

2. Système selon la revendication 1,
**caractérisé par le fait que**
le dispositif de communication (9) est un dispositif de traitement de données portable, de préférence avec un dispositif d'affichage (9a), par exemple un téléphone mobile, un smartphone, une tablette ou un ordinateur portable.

3. Système selon l'une des revendications 1 ou 2,
**caractérisé par le fait que**
le transfert de données (11) entre la première (4) et la troisième interface de communication (10) a lieu par l'intermédiaire du premier canal de communication (15), lequel est différent du deuxième canal de communication (16) agencé pour la communication entre la deuxième (6) et la troisième interface de communication (10).

4. Système selon l'une des revendications précédentes,
**caractérisé par le fait qu'**
au moins l'un des canaux de communication (15, 16), de préférence les deux, pour la communication entre la première (4) et la deuxième interface de communication (6) ou entre la deuxième (6) et la troisième interface de communication (10) utilise, au moins par endroits, une technologie sans fil.

5. Système selon l'une des revendications précédentes,
**caractérisé par le fait que**
le premier canal de communication (15) pour la communication entre la première (4) et la troisième interface de communication (6) est basé sur une technologie sans fil nécessitant une faible consommation d'énergie avec une portée inférieure à 300 m, de préférence inférieure à 100 m, de préférence inférieure à 50 m, de préférence inférieure à 30 m, de préférence inférieure à 10 m, de préférence inférieure à 5 m, de préférence inférieure à 3 m, de préférence inférieure à 1 m, de façon particulièrement préférée inférieure à 50 cm, de préférence une technologie sans fil qui est choisie dans un groupe qui comporte une technologie NFC, une technologie RFID et une technologie de transmission optique.

6. Système selon l'une des revendications précédentes,
**caractérisé par le fait que**
le deuxième canal de communication (16) pour la communication entre la deuxième (6) et la troisième interface de communication (10) est basé, au moins par endroits, sur une technologie sans fil avec une portée maximale de plus de 30 m, de préférence de plus de 100 m, de préférence de plus de 500 m, de préférence de plus de 1 km, de manière particulièrement préférée de plusieurs km, de préférence sur une technologie de transmission qui est choisie dans un groupe qui comporte une liaison WLAN, une liaison radio mobile, une liaison GSM, une liaison UMTS, une liaison GPRS, une liaison LTE.

7. Système selon l'une des revendications précédentes,
**caractérisé par le fait que**
des données supplémentaires sont transmissibles entre la deuxième (6) et la première interface de communication (4) par l'intermédiaire du dispositif d'interface, lesquelles données sont de préférence choisies dans un groupe qui comporte des données temporelles, des mises à jour, des informations système, un comportement d'utilisation, des tentatives d'utilisation (infructueuses), des tentatives de connexion (infructueuses), le niveau de remplissage du conteneur à ordures et l'emplacement du conteneur à ordures.

8. Système selon l'une des revendications précédentes,
**caractérisé par le fait que**
le dispositif d'interface du dispositif de communication (9) attribuable à l'utilisateur présente un dispositif de traitement de données, lequel est agencé pour la modulation de données pour la transmission sur différents canaux de communication (15, 16) et/ou pour un codage et/ou un décodage des données reçues par une première ou deuxième interface de communication (4, 6) avant leur transmission sur l'autre interface respective de la première ou deuxième interface de communication (4, 6).

9. Procédé pour la commande d'un accès à un conteneur à ordures (2) pour un utilisateur, par une unité de commande électronique (3) reliée au conteneur à ordures (2) et ayant une première interface de communication (4) pour l'envoi et la réception de données, ledit procédé comportant les étapes consistant à :
a) initialiser un transfert de données d'identification (11) de la première interface de communication (4) à un dispositif de communication (9) attribuable à l'utilisateur et présentant une troisième interface de communication (10), avant l'utilisation du conteneur à ordures (2) ;
b) transmettre les données d'identification (11) pour le conteneur à ordures (2) et de l'utilisateur du dispositif de communication (9) présentant la troisième interface de communication (10) à un serveur (5) présentant une deuxième interface de communication (6) ;
c) recevoir les données d'identification (11) par la deuxième interface de communication (6) et acheminer les données d'identification (11) à un gestionnaire d'authentification (9) du serveur (5) ;
d) attribuer des données utilisateur (12) provenant d'une base de données (8) du serveur (5) aux données d'identification (11) par le gestionnaire d'authentification (9) ;
e) générer un signal pour accorder ou refuser l'accès à ce conteneur à ordures (2) pour cet utilisateur ;
f) transmettre le signal de la deuxième interface de communication (6) sur la troisième interface de communication (10) et/ou sur le dispositif de communication (9) et facultativement convertir le signal dans le dispositif de communication (9) ;
g) transmettre un signal de la troisième interface de communication (10) et/ou du dispositif de communication (9) sur la première interface de communication (4) ;
h) accorder ou refuser l'accès à ce conteneur à ordures (2) pour l'utilisateur en fonction du signal reçu par lui sur ladite première interface de communication (4),
où l'étape a) a lieu par un premier canal de communication (15), lequel est différent du second canal de communication (16) utilisé dans l'étape b), où la communication a lieu de façon décalée dans le temps par les deux canaux de communication, lorsqu'un état hors ligne est détecté par le dispositif de communication, lorsqu'une communication entre la troisième interface de communication (10) et la deuxième interface de communication (11) n'est pas possible, où par le dispositif de communication (9) de façon autonome l'accès au conteneur à ordures est permis ou refusé sur la base du dernier résultat de l'authentification par le serveur.

10. Procédé selon la revendication 9, **caractérisé par le fait qu'** au moins l'une des étapes a) et b), de préférence les deux, est réalisée par transmission sans fil de données au moins par endroits.

11. Procédé selon l'une des revendications 9 ou 10,
**caractérisé par le fait que**
l'accès est limité par authentification autonome par le dispositif de communication à un nombre maximal défini, le nombre maximal défini étant inférieur à 10, de préférence inférieur à 5, de façon davantage préférée inférieur à 3, de façon particulièrement préférée inférieur à 2.

12. Procédé selon l'une des revendications 9 à 11,
**caractérisé par le fait que**
pour l'étape a), une technologie sans fil nécessitant une faible consommation d'énergie et ayant une portée inférieure à 300 m, de préférence inférieure à 100 m, de préférence inférieure à 50 m, de préférence inférieure à 30 m, de préférence inférieure à 10 m, de préférence inférieure à 5 m, de façon particulièrement préférée inférieure à 3 m, de préférence inférieure à 1 m, de façon particulièrement préférée inférieure à 50 cm, est utilisée, de préférence une technologie de transmission qui est choisie dans un groupe qui comporte une technologie NFC, une technologie RFID et une technologie de transmission optique ; et
pour l'étape b), au moins par endroits, une technologie sans fil avec une portée maximale de plus de 30 m, de préférence de plus de 100 m, de préférence de plus de 500 m, de préférence de plus de 1 km, de façon particulièrement préférée de plusieurs km est utilisée, de préférence une technologie de transmission qui est choisie dans un groupe qui comporte une liaison WLAN, une liaison radio mobile, une liaison GSM, une liaison UMTS, une liaison GPRS, une liaison LTE.

13. Procédé selon l'une des revendications 9 à 11,
**caractérisé par le fait qu'**
à l'étape h), lors d'une réception d'un signal sur la première interface de communication (4), lequel code l'octroi de l'accès à ce conteneur à ordures (2) pour l'utilisateur, un signal de commande est généré, lequel déverrouille un dispositif de verrouillage du conteneur à ordures (2).

14. Procédé selon l'une des revendications 9 à 13,
**caractérisé par le fait que**
le signal transmis à l'étape g) de la troisième interface de communication (10) et/ou du dispositif de communication (9) sur la première interface de communication (4) comporte un code unique ou roulant.

15. Procédé selon l'une des revendications 9 à 14,
**caractérisé par le fait que**
comme dispositif de communication (9), est utilisé un dispositif de traitement de données portable, de préférence avec un dispositif d'affichage (9a), par exemple un téléphone mobile, un smartphone, une tablette ou un ordinateur portable.
